(19) Europäisches Patentamt / European Patent Office / Office européen des brevets

(11) **EP 4 576 249 A1**

(12) **EUROPEAN PATENT APPLICATION**
published in accordance with Art. 153(4) EPC

(43) Date of publication:
**25.06.2025 Bulletin 2025/26**

(21) Application number: **22956806.8**

(22) Date of filing: **30.08.2022**

(51) International Patent Classification (IPC):
**H01M 4/36** *(2006.01)* **H01M 4/587** *(2010.01)*

(52) Cooperative Patent Classification (CPC):
**H01M 4/36; H01M 4/587**

(86) International application number:
**PCT/CN2022/115902**

(87) International publication number:
**WO 2024/044974 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
• JIN, Wenbo
  Ningde, Fujian 352100 (CN)
• FENG, Pengyang
  Ningde, Fujian 352100 (CN)

(74) Representative: **Icosa**
**83 avenue Denfert-Rochereau**
**75014 Paris (FR)**

(54) **NEGATIVE ELECTRODE SHEET, SECONDARY BATTERY, AND ELECTRONIC DEVICE**

(57) A negative electrode plate is provided. The negative electrode plate includes a negative electrode current collector and a negative electrode active material layer disposed on the negative electrode current collector. The negative electrode active material layer includes a negative electrode active material. The negative electrode active material includes negative electrode active material particles, the negative electrode active material particles including a first particle having a pore. In a 200 $\mu m \times 200$ $\mu m$ region of a cross section of the negative electrode active material layer, the negative electrode active material satisfies $0.10 \leq TD - 0.05 \times (1/X) \leq 0.40$, where X represents a ratio of an average cross-sectional area of the pore in the first particle to an average cross-sectional area of the first particle, and $4.0\% \leq X \leq 15\%$, and TD represents a tap density of the negative electrode active material, in $g/cm^3$. The negative electrode plate of this application has excellent kinetic performance, and can effectively improve charge and discharge performance of a secondary battery at low temperatures. A secondary battery including the negative electrode plate is further provided.

FIG. 1

EP 4 576 249 A1

**Description**

**TECHNICAL FIELD**

This application relates to the field of energy storage, and in particular, to a negative electrode plate, a secondary battery, and an electronic apparatus.

**BACKGROUND**

As the secondary battery market expands continuously, requirements for secondary battery performance also continue to grow, of which discharge rate performance is an important indicator. In addition, considering the low temperatures in some regions in winter, a secondary battery needs to have high performance, for example, a high discharge rate, at low temperatures. In the prior art, a lithium intercalation path of active ions is shortened mainly by reducing a particle size of an active material, and rate performance at low temperatures is improved mainly through modification by coating. However, these two methods lead to great loss of compacted density, gram capacity, and the like of a negative electrode active material, as well as high costs.

**SUMMARY**

In view of the shortcomings of the prior art, this application provides a negative electrode plate and a secondary battery including the negative electrode plate. The negative electrode plate of this application has excellent kinetic performance, and can effectively improve charge and discharge performance of a secondary battery at low temperatures.
According to a first aspect, this application provides a negative electrode plate. The negative electrode plate includes a negative electrode current collector and a negative electrode active material layer disposed on the negative electrode current collector. The negative electrode active material layer includes a negative electrode active material. The negative electrode active material includes negative electrode active material particles, the negative electrode active material particles including a first particle having a pore. In a 200 $\mu$m×200 $\mu$m region of a cross section of the negative electrode active material layer, the negative electrode active material satisfies 0.10≤TD-0.05×(1/X)≤0.40, where X represents a ratio of an average cross-sectional area of the pore in the first particle to an average cross-sectional area of the first particle and 4.0%≤X≤15%, and TD represents a tap density of the negative electrode active material, in g/cm$^3$. The negative electrode active material particles have pores, especially having pores inside, which can greatly enlarge a contact surface between the negative electrode plate and an electrolyte. This obviously increases the number of lithium intercalation channels for active ions, such as lithium ions, so that the active ions are easier to diffuse, which facilitates rapid intercalation and deintercalation of the active ions and improves rate performance of the negative electrode plate, thereby improving charge and discharge performance of a secondary battery at low temperatures. However, a proportion of the pores of the negative electrode active material particles should not be too high. Too many pores may intensify side reaction between the active material and the electrolyte, which further affects initial coulombic efficiency and storage performance of the secondary battery and reduces rate performance of the secondary battery at low temperatures. In addition, the structure and distribution of the pores inside the negative electrode active material particles also affect the tap density. Too high or too low tap density is not conducive to subsequent processing of a negative electrode slurry, which in turn affects electrical performance of the secondary battery. In this application, the tap density of the negative electrode active material and a ratio of an average cross-sectional area of the pore in the first particle having the pore in the negative electrode active material to an average cross-sectional area of the first particle are controlled to be within the foregoing ranges, so that the tap density of the negative electrode active material well matches the pore structure. On the one hand, the proper pore structure obviously increases the number of lithium intercalation channels inside the negative electrode plate and allows the active ions to diffuse more easily, which facilitates rapid intercalation and deintercalation of the active ions and improves the rate performance of the negative electrode plate, thereby improving the charge and discharge performance of the secondary battery at low temperatures. On the other hand, the proper tap density improves processing performance of the material and also improves the rate performance of the secondary battery at low temperatures to some extent.
In some embodiments, 0.1≤TD-0.05×(1/X)≤0.35. In some embodiments, 0.19≤TD-0.05×(1/X)≤0.3. The tap density of the negative electrode active material and the ratio of the average cross-sectional area of the pore in the first particle to the average cross-sectional area of the first particle are within the foregoing ranges, which can further improve the rate performance of the secondary battery at low temperatures.
In some embodiments, 5%≤X≤13%. In some embodiments, 7%≤X≤13%. A proportion of the cross-sectional area of the pore is within the foregoing range, so that the secondary battery has relatively high rate performance at low temperatures. When the proportion of the cross-sectional area of the pore is too low, the electrolyte has poor wettability inside the negative electrode plate, the active ions are relatively difficult to diffuse, and the rate performance of the secondary battery at low temperatures is barely improved. When the proportion of the cross-sectional area of the pore is too high, the side reaction between the negative electrode active material and the electrolyte is intensified, which in turn affects the initial coulombic efficiency and storage performance of the secondary battery and reduces the rate performance of the secondary battery at low temperatures.

In some embodiments, $0.5 \leq TD \leq 1.5$. In some embodiments, $0.6 \leq TD \leq 1.3$. Too high or too low tap density of the negative electrode active material affects performance of subsequent negative electrode slurry processing, which is not conducive to application of the negative electrode slurry on a current collector. In addition, stability of the slurry is relatively poor, affecting the electrical performance of the secondary battery.

In some embodiments, in the 200 $\mu$m$\times$200 $\mu$m region of a cross section of the negative electrode active material layer, the negative electrode material satisfies $0.40 \leq 2 \times BET \text{-} L/D \leq 1.50$ and $L/D \leq 2.50$, where L represents a largest cross-sectional length of the negative electrode active material particles, in $\mu$m, D represents a smallest cross-sectional length of the negative electrode active material particles, in $\mu$m, and BET represents a specific surface area of the negative electrode active material, in $m^2$/g. When such values are within the foregoing ranges, the negative electrode active material particles are ellipsoidal with high mechanical strength. In addition, the active ions have many intercalation and deintercalation directions and short intercalation and deintercalation paths, helping to improve kinetic performance. Moreover, the moderate specific surface area of the negative electrode active material allows for high wettability of the electrolyte inside the negative electrode plate, which can further improve the rate performance of the secondary battery at low temperatures. In some embodiments, $0.50 \leq 2 \times BET \text{-} L/D \leq 1.30$.

In some embodiments, $1.0 \leq L/D \leq 2.2$. When L/D is too large, the negative electrode active material particles are elongated in shape, which makes the particles prone to break during a pressing process and is not conducive to intercalation and deintercalation of the active ions along all directions, resulting in poor kinetic performance of the negative electrode active material, and reducing the rate performance of the secondary battery at low temperatures.

In some embodiments, $0.5 \leq BET \leq 2.5$. When the specific surface area is too large, the negative electrode active material has high reaction activity on the surface, and easily reacts with the electrolyte, adversely affecting the storage performance of the secondary battery.

In some embodiments, in the 200 $\mu$m$\times$200 $\mu$m region of a cross section of the negative electrode active material layer, an average maximum Feret diameter F of the negative electrode active material particles satisfies 4 $\mu$m$\leq F \leq 55$ $\mu$m. When a size of the negative electrode active material particles is too small, compacted density of the particles is relatively low, which reduces compacted density of the negative electrode plate and intensifies reaction between small particles and the electrolyte, affecting storage and cycling performance of the secondary battery. When the size of the negative electrode active material particles is too large, the intercalation and deintercalation paths of the active ions in the particles are relatively long, which affects rate performance of the secondary battery.

In some embodiments, a single-side thickness H of the negative electrode active material layer satisfies $H \leq 90$ $\mu$m. In some embodiments, 25 $\mu$m$\leq H \leq 60$ $\mu$m. When a thickness of the negative electrode active material layer is too large, a transmission path of the active ions in the negative electrode plate is too long, and the active ions are difficult to diffuse, which intensifies polarization of the secondary battery, leaving the secondary battery prone to lithium precipitation and reducing its rate performance.

In some embodiments, a single-side energy density E of the negative electrode active material layer satisfies 0.01 mAh/mm$^2 \leq E \leq 0.07$ mAh/mm$^2$. The energy density of the negative electrode active material layer is directly proportional to its stacking density. When the energy density of the negative electrode active material layer is too low, its stacking density is too low accordingly. Although low stacking density is beneficial to the rate performance of the secondary battery, it will cause excessive energy density loss. When the energy density of the negative electrode active material layer is too high, its stacking density is too high accordingly. A high stacking density seriously affects the rate performance of the secondary battery, especially rate performance at low temperatures.

In some embodiments, in Raman test, the negative electrode active material satisfies $ID/IG \leq 0.6$, where ID is an intensity of a peak at 1350 cm$^{-1}$ in a Raman spectra; and IG is an intensity of a peak at 1580 cm$^{-1}$ in the Raman spectra. In some embodiments, $0.15 \leq ID/IG \leq 0.5$. A value of ID/IG can characterize a defect degree of the negative electrode active material. A larger value of ID/IG represents a higher defect degree. An excessively high defect degree of the negative electrode active material is not conducive to formation of SEI films, affecting the rate performance of the secondary battery.

In some embodiments, an orientation index OI of the negative electrode active material satisfies $OI \leq 25$. In some embodiments, $5 \leq OI \leq 25$. An OI value represents the orientation index of the negative electrode active material. An excessively large OI value represents an excessively high orientation index of the negative electrode active material, which is not conducive to the intercalation and deintercalation of the active ions, affecting the rate performance of the secondary battery.

In some embodiments, the negative electrode active material includes graphite. In some embodiments, the negative electrode active material includes natural graphite.

According to a second aspect, this application provides a secondary battery. The secondary battery includes the negative electrode plate of the first aspect.

3

In some embodiments, a discharge ratio of the secondary battery at 0°C satisfies Q1/Q2≥0.8, where Q1 is a discharge capacity at 1C at 0°C and Q2 is a discharge capacity at 1C at 25°C.

According to a third aspect, this application provides an electronic apparatus. The electronic apparatus includes the secondary battery of the second aspect.

The negative electrode active material in the negative electrode plate of this application has proper tap density and porosity, so that the negative electrode plate has excellent kinetic performance, thereby improving the charge and discharge performance of the secondary battery effectively.

## BRIEF DESCRIPTION OF DRAWINGS

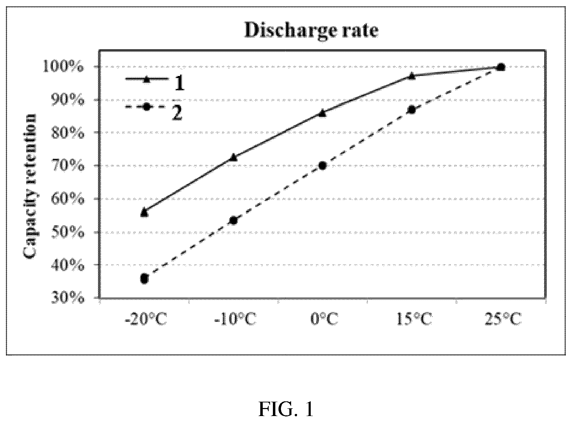

FIG. 1 shows discharge rates of secondary batteries in Example 6 and Comparative Example 3 at different temperatures, where 1 represents Example 6 and 2 represents Comparative Example 3.

## DETAILED DESCRIPTION

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which ca be combined with any other point or individual numerical value or combined with another lower limit or upper limit to form a range not expressly recorded.

In the descriptions of this specification, "more than" or "less than" is inclusive of the present number unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in some embodiments of this application).

A list of items connected by the terms "at least one of", "at least one piece of", "at least one type of", or the like may mean any combination of the listed items. For example, if items A and B are listed, the phrase "at least one of A or B" means only A; only B; or A and B. In another example, if items A, B, and C are listed, the phrase "at least one of A, B, or C" means only A, only B, only C, A and B (excluding C), A and C (excluding B), B and C (excluding A), or all of A, B, and C. The item A may contain a single composition or a plurality of compositions. The item B may contain a single composition or a plurality of compositions. The item C may contain a single composition or a plurality of compositions.

The following further describes this application with reference to specific embodiments. It should be understood that these specific embodiments are merely intended to illustrate this application but not to limit the scope of this application.

I. Negative electrode plate

According to a first aspect, this application provides a negative electrode plate. The negative electrode plate includes a negative electrode current collector and a negative electrode active material layer disposed on the negative electrode current collector. The negative electrode active material layer includes a negative electrode active material. The negative electrode active material includes negative electrode active material particles, the negative electrode active material particles including a first particle having a pore. In a 200 $\mu$m$\times$200 $\mu$m region of a cross section of the negative electrode active material layer, the negative electrode active material satisfies $0.10 \leq TD-0.05 \times (1/X) \leq 0.40$, where X represents a ratio of an average cross-sectional area of the pore in the first particle to an average cross-sectional area of the first particle and $4.0\% \leq X \leq 15\%$, and TD represents a tap density of the negative electrode active material, in g/cm$^3$. The negative electrode active material particles have pores, especially having pores inside, which can greatly enlarge a contact surface between the negative electrode plate and an electrolyte. This obviously increases the number of lithium intercalation channels for active ions, such as lithium ions, so that the active ions are easier to diffuse, which facilitates rapid intercalation and deintercalation of the active ions and improves rate performance of the negative electrode plate, thereby improving charge and discharge performance of a secondary battery at low temperatures. However, a proportion of the pores of the negative electrode active material particles should not be too high. Too many pores may intensify side reaction between the active material and the electrolyte, which further affects initial coulombic efficiency and storage performance of the secondary battery and reduces rate performance of the secondary battery at low temperatures. In addition, the structure and distribution of the pores inside the negative electrode active material particles also affect the tap density. Too high or too low tap density is not conducive to subsequent processing of a negative electrode slurry, which in turn affects electrical performance of the secondary battery. In this application, the tap density of the negative electrode active material and a ratio of an average cross-sectional area of the pore in the first particle having the pore in the negative electrode active material to an average cross-sectional area of the first particle are controlled to be within the foregoing ranges, so that the tap density of the negative electrode active material well matches the pore structure. On the one hand, the proper pore structure obviously increases the number of lithium intercalation channels inside the negative electrode plate and allows the active ions to diffuse more easily, which facilitates rapid intercalation and deintercalation of the active ions and improves the rate performance of the negative electrode plate, thereby improving the charge and discharge performance of the secondary battery at low temperatures. On the other hand, the proper tap density improves processing performance of the material and also improves the rate performance of the secondary battery at low temperatures to some extent.

In this application, the "cross section of the negative electrode active material layer" may be a cross section along a thickness direction of the negative electrode active material layer.

In some embodiments, TD-0.05×1/X is 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, or 0.39, or within a range defined by any two values thereof. In some embodiments, $0.1 \leq TD-0.05 \times (1/X) \leq 0.35$. In some embodiments, $0.19 \leq TD-0.05 \times (1/X) \leq 0.3$. The tap density of the negative electrode active material and the ratio of the average cross-sectional area of the pore in the first particle to the average cross-sectional area of the first particle are within the foregoing ranges, which can further improve the rate performance of the secondary battery at low temperatures.

In some embodiments, X is 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, or 14.5%, or within a range defined by any two values thereof. In some embodiments, $5\% \leq X \leq 13\%$. In some embodiments, $7\% \leq X \leq 13\%$. A proportion of the cross-sectional area of the pore is within the foregoing range, so that the secondary battery has relatively high rate performance at low temperatures. When the proportion of the cross-sectional area of the pore is too low, the electrolyte has poor wettability inside the negative electrode plate, the active ions are relatively difficult to diffuse, and the rate performance of the secondary battery at low temperatures is barely improved. When the proportion of the cross-sectional area of the pore is too high, the side reaction between the negative electrode active material and the electrolyte is intensified, which in turn affects the initial coulombic efficiency and storage performance of the secondary battery and reduces the rate performance of the secondary battery at low temperatures.

In some embodiments, TD is 0.6, 0.65, 0.7, 0.75, 0.8, 0.85, 0.9, 0.95, 1.0, 1.05, 1.1, 1.15, 1.2, 1.25, 1.3, 1.35, 1.4, or 1.45, or within a range defined by any two values thereof. In some embodiments, $0.5 \leq TD \leq 1.5$. In some embodiments, $0.6 \leq TD \leq 1.3$. Too high or too low tap density of the negative electrode active material affects performance of subsequent negative electrode slurry processing, which is not conducive to application of the negative electrode slurry on a current collector. In addition, stability of the slurry is relatively poor, affecting the electrical performance of the secondary battery.

In some embodiments, in the 200 μm×200 μm region of a cross section of the negative electrode active material layer, the negative electrode material satisfies $0.40 \leq 2 \times BET-L/D \leq 1.50$ and $L/D \leq 2.50$, where L represents the largest cross-sectional length of the negative electrode active material particles, in μm, D represents the smallest cross-sectional length of the negative electrode active material particles, in μm, and BET represents a specific surface area of the negative electrode active material, in $m^2/g$. When such values are within the foregoing ranges, the negative electrode active material particles are ellipsoidal with high mechanical strength. In addition, the active ions have many intercalation and deintercalation directions and short intercalation and deintercalation paths, helping to improve kinetic performance. Moreover, the moderate specific surface area of the negative electrode active material allows for high wettability of the electrolyte inside the negative electrode plate, which can further improve the rate performance of the secondary battery at low temperatures. In some embodiments, 2×BET-L/D is 0.45, 0.5, 0.6, 0.65, 0.7, 0.75, 0.8, 0.85, 0.9, 0.95, 1.0, 1.05, 1.1, 1.15, 1.2, 1.25, 1.3, 1.35, 1.4, or 1.45, or within a range defined by any two values thereof. In some embodiments, $0.50 \leq 2 \times BET-L/D \leq 1.30$.

In some embodiments, L/D is 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.05, 2.1, or 2.15, or within a range defined by any two values thereof. In some embodiments, $1.0 \leq L/D \leq 2.2$. When L/D is too large, the negative electrode active material particles are elongated in shape, which makes the particles prone to break during a pressing process and is not conducive to intercalation and deintercalation of the active ions along all directions, resulting in poor kinetic performance of the negative electrode active material, and reducing the rate performance of the secondary battery at low temperatures.

In some embodiments, BET is 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, or 2.4, or within a range defined by any two values thereof. In some embodiments, $0.5 \leq BET \leq 2.5$. When the specific surface area is too large, the negative electrode active material has high reaction activity on the surface, and easily reacts with the electrolyte, adversely affecting the storage performance of the secondary battery.

In some embodiments, in the 200 μm×200 μm region of a cross section of the negative electrode active material layer, an average maximum Feret diameter F of the negative electrode active material particles satisfies 4 μm≤F≤55 μm. In some embodiments, F is 5 μm, 10 μm, 15 μm, 20 μm, 25 μm, 30 μm, 35 μm, 35 μm, 40 μm, 45 μm, or 50 μm, or within a range defined by any two values thereof. When a size of the negative electrode active material particles is too small, compacted density of the particles is relatively low, which reduces compacted density of the negative electrode plate and intensifies reaction between small particles and the electrolyte, affecting storage and cycling performance of the secondary battery. When the size of the negative electrode active material particles is too large, the intercalation and deintercalation paths of the active ions in the particles are relatively long, which affects rate performance of the secondary battery.

In some embodiments, a single-side thickness H of the negative electrode active material layer satisfies H≤90 $\mu$m. For example, H is 20 $\mu$m, 25 $\mu$m, 30 $\mu$m, 35 $\mu$m, 40 $\mu$m, 45 $\mu$m, 50 $\mu$m, 55 $\mu$m, 60 $\mu$m, 65 $\mu$m, 70 $\mu$m, 75 $\mu$m, 80 $\mu$m, or 85 $\mu$m. In some embodiments, 25 $\mu$m≤H≤60 $\mu$m. When a thickness of the negative electrode active material layer is too large, a transmission path of the active ions in the negative electrode plate is too long, and the active ions are difficult to diffuse, which intensifies polarization of the secondary battery, leaving the secondary battery prone to lithium precipitation and reducing its rate performance.

In some embodiments, a single-side energy density E of the negative electrode active material layer satisfies 0.01 mAh/mm$^2$≤E≤0.07 mAh/mm$^2$. In some embodiments, E is 0.015 mAh/mm$^2$, 0.02 mAh/mm$^2$, 0.025 mAh/mm$^2$, 0.03 mAh/mm$^2$, 0.035mAh/mm$^2$, 0.04 mAh/mm$^2$, 0.045 mAh/mm$^2$, 0.05 mAh/mm$^2$, 0.055 mAh/mm$^2$, 0.06 mAh/mm$^2$, or 0.065 mAh/mm$^2$, or within a range defined by any two values thereof. In some embodiments, 0.013 mAh/mm$^2$≤E≤0.056 mAh/mm$^2$. The energy density of the negative electrode active material layer is directly proportional to its stacking density. When the energy density of the negative electrode active material layer is too low, its stacking density is too low accordingly. Although low stacking density is beneficial to the rate performance of the secondary battery, it will cause excessive energy density loss. When the energy density of the negative electrode active material layer is too high, its stacking density is too high accordingly. A high stacking density seriously affects the rate performance of the secondary battery, especially rate performance at low temperatures.

In some embodiments, in Raman test, the negative electrode active material satisfies ID/IG≤0.6, where ID is an intensity of a peak at 1350 cm$^{-1}$ in a Raman spectra; and IG is an intensity of a peak at 1580 cm$^{-1}$ in the Raman spectra. In some embodiments, ID/IG is 0.2, 0.25, 0.3, 0.35, 0.4, or 0.45, or within a range defined by any two values thereof. In some embodiments, 0.15≤ID/IG≤0.6. In some embodiments, 0.15≤ID/IG≤0.5. A value of ID/IG can characterize a defect degree of the negative electrode active material. A larger value of ID/IG represents a higher defect degree. An excessively high defect degree of the negative electrode active material is not conducive to formation of SEI films, affecting the rate performance of the secondary battery.

In some embodiments, an orientation index OI of the negative electrode active material satisfies OI≤25. In some embodiments, OI is 6, 8, 10, 12, 14, 16, 18, 20, 22, or 24, or within a range defined by any two values thereof. In some embodiments, 5≤OI≤25. An OI value represents the orientation index of the negative electrode active material. An excessively large OI value represents an excessively high orientation index of the negative electrode active material, which is not conducive to the intercalation and deintercalation of the active ions, affecting the rate performance of the secondary battery.

In some embodiments, the negative electrode active material includes graphite. In some embodiments, the negative electrode active material includes natural graphite.

In some embodiments, a manufacturing process of graphite includes: selecting natural large flake graphite as raw material; pulverizing the graphite to 5 $\mu$m to 15 $\mu$m; performing surface oxidation treatment on the graphite to increase organic groups; and then performing spheroidization treatment. After the graphite is transformed into spherical graphite, it is subjected to treatment at a high temperature of 5000°C to 1200°C. At the high temperature, organic groups introduced into the interior of the particles during the spheroidization treatment decompose intensively and generate gas quickly, forming pores in the graphite particles.

II. Secondary battery

According to a second aspect, this application provides a secondary battery. The secondary battery includes the negative electrode plate of the first aspect.

In some embodiments, a discharge ratio of the secondary battery at 0°C satisfies Q1/Q2≥0.8, where Q1 is a discharge capacity at 1C at 0°C and Q2 is a discharge capacity at 1C at 25°C.

In some embodiments, the negative electrode current collector includes copper foil, aluminum foil, nickel foil, stainless steel foil, titanium foil, foamed nickel, foamed copper, polymer substrate coated with conductive metal, or any combination thereof.

In some embodiments, the negative electrode active material layer further includes a binder and a conductive agent. In some embodiments, the binder includes, but is not lomited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene 1,1-difluoride, polyethylene, polypropylene, styrene-butadiene rubber, acrylic styrene-butadiene rubber, epoxy resin, nylon, or the like.

In some embodiments, the conductive agent includes, but is not limited to, a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The secondary battery of this application further includes a positive electrode, where the positive electrode includes a positive electrode current collector and a positive electrode active material layer, and the positive electrode active material layer includes a positive electrode active material, a binder, and a conductive agent.

According to some embodiments of this application, the positive electrode current collector may be a metal foil or composite current collector. For example, an aluminum foil can be used. A composite current collector may be formed by forming a metal material (copper, copper alloy, nickel, nickel alloy, titanium, titanium alloy, silver, silver alloy, or the like) on a polymer material matrix.

According to some embodiments of this application, the positive electrode active material includes at least one of lithium cobalt oxide, lithium nickel cobalt manganate, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganese oxide, spinel-type lithium nickel manganese oxide, or lithium titanate. In some embodiments, the binder includes a binder polymer, for example, at least one of polyvinylidene fluoride, polytetrafluoroethylene, polyolefin, sodium carboxymethyl cellulose, lithium carboxymethyl cellulose, modified polyvinylidene fluoride, modified SBR rubber, or polyurethane. In some embodiments, a polyolefin binder includes at least one of polyethylene, polypropylene, polyene ester, polyvinyl alcohol, or polyacrylic acid. In some embodiments, the conductive agent includes: a carbon-based material such as natural graphite, artificial graphite, carbon black, acetylene black, Ketjen black, or carbon fiber; a metal-based material such as metal powder or metal fiber of copper, nickel, aluminum, silver; a conductive polymer such as a polyphenylene derivative; or a mixture thereof.

The secondary battery of this application further includes a separator. The separator used in the secondary battery according to this application is not particularly limited to any material or shape, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, a membrane, or a composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by a mixed polymer and an inorganic substance. The inorganic substance layer includes inorganic particles and a binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. A polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

The secondary battery of this application further includes an electrolyte. An electrolyte that can be used in this application may be an electrolyte known in the prior art.

According to some embodiments of this application, the electrolyte includes an organic solvent, lithium salt, and an optional additive. The organic solvent in the electrolyte of this application can be any organic solvent known in the prior art that can be used as a solvent of an electrolyte. Electrolyte used in the electrolyte according to this application is not limited, and may be any electrolyte known in the prior art. The additive of the electrolyte according to this application can be any additive known in the prior art that can be used as an additive of the electrolyte. In some embodiments, the organic solvent includes, but is not limited to, ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, including at least one of 1,3-dioxolane (DOL) or ethylene glycol dimethyl ether (DME). In some embodiments, the lithium salt includes at least one of organic lithium salt or inorganic lithium salt. In some embodiments, the lithium salt includes, but is not limited to, lithium hexafluorophosphate ($LiPF_6$), lithium tetrafluoroborate ($LiBF_4$), lithium difluorophosphate ($LiPO_2F_2$), lithium difluoromethane sulfonamide $LiN(CF_3SO_2)_2$ (LiTFSI), lithium bis (fluorosulfonyl) imine $Li(N(SO_2F)_2)$ (LiFSI), lithium bis(oxalate)borate $LiB(C_2O_4)_2$ (LiBOB), or lithium difluoro(oxalato)borate $LiBF_2(C_2O_4)$ (LiDFOB). In some embodiments, the additive includes at least one of fluoroethylene carbonate or adiponitrile.

According to some embodiments of this application, the secondary battery of this application includes, but is not limited to, a lithium-ion battery or a sodium-ion battery. In some embodiments, the secondary battery includes a lithium-ion battery.

III. Electronic apparatus

This application further provides an electronic apparatus. The electronic apparatus includes the secondary battery in the second aspect of this application.

The electronic device or apparatus in this application is not particularly limited. In some embodiments, the electronic device in this application includes, but is not limited to: a notebook computer, a pen-input computer, a mobile computer, an electronic book player, a portable phone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power supply, a motor, an automobile, a motorcycle, an assisted bicycle, a bicycle, a lighting appliance, a toy, a game console, a clock, an electric tool, a flashlight, a camera, a large household battery, a lithium-ion capacitor, or the like.

In the following examples and comparative examples, all reagents, materials, and instruments used are commercially available unless otherwise specified.

**Examples and comparative examples**

**Example 1**

Preparation of negative electrode active material

Natural large flake graphite from Jixi City, Heilongjiang Province was selected as raw material. The graphite was pulverized to 10 $\mu$m first, and then an oxidant solution was prepared (5 mol/L sulfuric acid solution and 3 mol/L nitric acid solution were mixed at a mass ratio of 2:1). The oxidant solution was added into the pulverized flake graphite at a mass ratio of 1:10. The oxidant solution and the flake graphite were fully stirred for 3 h for oxidation. After surface oxidation treatment was performed on the flake graphite to increase organic groups, spheroidization treatment was performed. Specifically, the stirred mixture was dried. The dried flake graphite was placed in a ball mill for ball milling for 30min, and after it was curled and transformed into spherical graphite, treatment at a high temperature of 800°C was performed to obtain a negative electrode active material. At the high temperature, organic oxidized groups introduced into the interior of the particles during the spheroidization treatment decomposed intensively and generated gas quickly, so that pores were formed due to substance volatilization and gas expansion inside the spherical graphite obtained through curling. In this example, a ratio X of a cross-sectional area of the pores to a cross-sectional area of the particles is 5.0%, TD of the active material is 1.13 g/cm$^3$, and the value of TD-0.05$\times$(1/X) is 0.13.

Preparation of negative electrode

The foregoing negative electrode active material, an additive, a binder styrene-butadiene rubber (SBR for short), and a thickener sodium carboxymethyl cellulose (CMC for short) at a weight ratio of 95.7:1.5:1.8:1 were thoroughly stirred and mixed in an appropriate amount of deionized water solvent to obtain a uniform negative electrode slurry, and the slurry was applied onto a current collector Cu foil with a coating weight of 0.165mg/mm$^2$ per unit area. Then, drying and cold pressing were performed to obtain the foregoing negative electrode plate.

Preparation of positive electrode

Lithium iron phosphate (chemical formula: LiFePO$_4$), a conductive agent acetylene black, and a binder polyvinylidene fluoride (PVDF for short) at a weight ratio of 96.3:2.2:1.5 were thoroughly stirred in an appropriate amount of N-methylpyrrolidone (NMP for short) solvent to obtain a uniform positive electrode slurry, and the positive electrode slurry was applied onto a current collector Al foil. Then, drying and cold pressing were performed to obtain a positive electrode plate.

Preparation of electrolyte

In a dry argon atmosphere glove box, ethylene carbonate (EC), propylene carbonate (PC), ethyl methyl carbonate (EMC), and diethyl carbonate (DEC) were mixed at a mass ratio of EC:EMC:DEC=1:3:3:3. Then, fluoroethylene carbonate and 1,3-propanesulfolactone were added and dissolved. After the mixture was thoroughly stirred, lithium salt LiPF$_6$ was added, and the foregoing substances were fully mixed to obtain an electrolyte. In the electrolyte, the mass percentage of LiPF$_6$ was 12.5%, the mass percentage of fluoroethylene carbonate was 2%, and the mass percentage of 1,3-propanesulfolactone was 2%. The mass percentage of each substance was calculated based on the mass of the electrolyte.

Preparation of separator

A polyethylene porous polymer film was used as a separator.

Preparation of lithium-ion battery

The positive electrode, the separator, and the negative electrode were sequentially stacked, so that the separator was located between the positive electrode and the negative electrode for separation. Then the stack was wound to obtain an electrode assembly. The electrode assembly was placed into an outer package aluminum-plastic foil film after being welded with tabs, and the prepared electrolyte was injected into the dried electrode assembly, followed by processes such as vacuum packaging, standing, formation, shaping, and capacity test, to obtain a soft pouch lithium-ion battery.

**Examples 2 to 10 and Comparative Examples 1 to 4**

Preparation of negative electrode active material

Preparation of the negative electrode active material was similar to that in Example 1 except that the corresponding negative electrode active material was prepared by adjusting parameters such as proportion and concentration of acid and temperature of high-temperature treatment. Specific preparation parameters are shown in Table a.

**Table a**

| Example | Concentration of sulfuric acid solution (mol/L) | Concentration of nitric acid solution (mol/L) | Mass of sulfuric acid solution:mass of nitric acid solution | Mass of oxidant solution:mass of flake graphite | Temperature of high-temperature treatment (°C) |
|---|---|---|---|---|---|
| Example 1 | 5 | 3 | 2:1 | 1:10 | 800 |
| Example 2 | 4 | 3 | 2:1 | 1:10 | 800 |
| Example 3 | 5 | 4 | 2:1 | 1:10 | 800 |
| Example 4 | 5 | 3 | 1:1 | 1:10 | 800 |
| Example 5 | 5 | 3 | 2:1 | 1:8 | 800 |
| Example 6 | 5 | 3 | 2:1 | 1:5 | 800 |
| Example 7 | 5 | 3 | 2:1 | 1:10 | 850 |
| Example 8 | 5 | 3 | 2:1 | 1:10 | 900 |
| Example 9 | 5 | 3 | 1:1 | 1:8 | 900 |
| Example 10 | 3 | 5 | 2:1 | 1:8 | 800 |
| Comparative Example 1 | 0 | 3 | 0:1 | 1:10 | 800 |
| Comparative Example 2 | 5 | 0 | 1:0 | 1:10 | 800 |
| Comparative Example 3 | 5 | 3 | 2:1 | 1:10 | 200 |
| Comparative Example 4 | 0 | 0 | 0:0 | 0:10 | 800 |

Preparation of the negative electrode, positive electrode, separator, electrolyte, and lithium-ion battery were the same as that in Example 1.

**Examples 11 to 16**

Preparation of negative electrode active material

Preparation of the negative electrode active material was similar to that in Example 6 except that the aspect ratio and specific surface area of the negative electrode active material were adjusted by adjusting the pulverization size of flake graphite. In the preparation processes in Examples 11 to 16, the pulverization sizes of flake graphite were 15.2 $\mu$m, 14.5 $\mu$m, 13.5 $\mu$m, 12.0 $\mu$m, 9.5 $\mu$m, and 8.2 $\mu$m, respectively.

Preparation of the negative electrode, positive electrode, separator, electrolyte, and lithium-ion battery were the same as that in Example 6.

**Examples 17 to 24**

Preparation of negative electrode active material

Preparation of the negative electrode active material was similar to that in Example 13 except that the average maximum Feret diameter of the negative electrode active material was adjusted by adjusting ball milling time. In the preparation processes in Examples 17 to 24, the ball milling time was 32 min, 37 min, 40 min, 45 min, 50 min, 55 min, 63 min, and 70 min, respectively.

Preparation of the negative electrode, positive electrode, separator, electrolyte, and lithium-ion battery were the same as that in Example 13.

**Examples 25 to 33**

Preparation of negative electrode active material

Preparation of the negative electrode active material was the same as that in Example 21.

Preparation of the negative electrode was similar to that in Example 21 except that the thickness and energy density of the negative electrode active material layer were adjusted by adjusting the coating weight of the active material per unit area. In the preparation processes in Examples 25 to 33, the coating weights of the active material per unit area were 0.125 mg/mm$^2$, 0.155 mg/mm$^2$, 0.178 mg/mm$^2$, 0.165 mg/mm$^2$, 0.128 mg/mm$^2$, 0.160 mg/mm$^2$, 0.133 mg/mm$^2$, 0.140 mg/mm$^2$, and 0.145 mg/mm$^2$, respectively.

Preparation of the positive electrode, separator, electrolyte, and lithium-ion battery was the same as that in Example 21.

**Examples 34 to 50**

Preparation of negative electrode active material

Preparation of the negative electrode active material is similar to that of Example 33, except that the tap density, defect degree, and OI value of the negative electrode active material were adjusted by adjusting the temperature of high-temperature treatment. In the preparation processes in Examples 34 to 50, the temperatures of high-temperature treatment were 890°C, 950°C, 1000°C, 850°C, 860°C, 880°C, 995°C, 860°C, 885°C, 970°C, 900°C, 920°C, 930°C, 950°C, 955°C, 966°C, and 980°C, respectively.

Preparation of the negative electrode, positive electrode, separator, electrolyte, and lithium-ion battery were the same as that in Example 33.

**Test methods**

**1. Tests of maximum Feret diameter and proportion of cross-sectional area of pore in cross-sectional area of particle**

Preparation process of argon ion polishing (CP) sample of negative electrode active material layer: A lithium-ion battery was disassembled to obtain a negative electrode plate, and the negative electrode plate was cut to a size of 6.0 mm×6.0 mm and then fastened on the sample table. One end of the negative electrode active material layer was treated using argon ion polishing (parameters: 6 kV accelerating voltage; and 3 h for each sample) to obtain a CP sample of the negative electrode active material layer.

After the CP sample of the negative electrode active material layer has been prepared, it was analyzed using a scanning electron microscope (SEM).

The scanning electron microscope used in this application was model JSM-6360LV of JEOL.

Average maximum Feret diameter of cross sections of negative electrode active material particles in a cross section of the negative electrode plate: The CP sample of the negative electrode active material layer was observed, and it was found that there were a certain quantity of particle cross sections within the 200 $\mu$m$\times$200 $\mu$m region on a cross section of the negative electrode active material layer along the thickness direction, and these cross sections were irregular in shape. For a cross section of one particle, two parallel lines were rotated one revolution along an outer tangent of the particle, where the longest distance between the parallel lines at a certain position is the maximum Feret diameter of the cross section of the particle. The maximum Feret diameters of all particles within the 200 $\mu$m$\times$200 $\mu$m region on the cross section of the negative electrode active material layer along the thickness direction were measured in turn, and then an average value was obtained through calculation, so as to obtain the average maximum Feret diameter of the negative electrode active material particles in the cross section of the negative electrode active material layer.

Cross-sectional area of negative electrode active material particles having a pore (that is, first particles): The CP sample of the negative electrode active material layer was observed and it was found that there were some particles having a pore structure within the 200 $\mu$m$\times$200 $\mu$m region on the cross section of the negative electrode active material layer along the thickness direction. The cross sections of these particles were irregular in shape, and their color contrasts were different from those around the particles. Based on their contrast characteristics, the cross-sectional areas of the particles could be calculated. The average cross-sectional area of all particles having pore characteristics within the 200 $\mu$m$\times$200 $\mu$m region of the negative electrode active material layer along the thickness direction was obtained through statistics and calculation, thereby obtaining the cross-sectional area of the first particles.

Cross-sectional area of pores in the first particles: There were some particles having a pore structure within the 200 $\mu$m$\times$200 $\mu$m region on the cross section of the negative electrode active material layer. The cross sections of the pores in the cross sections of these particles were irregular in shape, and their color contrasts were different from that of cross section of the active material. Areas of these cross sections of the pores were calculated based on contrast characteristics. The average cross-sectional area of the pores in all first particles within the 200 $\mu$m$\times$200 $\mu$m region of the negative electrode active material layer along the thickness direction was obtained through statistics and calculation, thereby obtaining the cross-sectional area of the pores in the first particles.

Test of proportion of the cross-sectional area of the pores in the cross-sectional area of the particles: A value of X was obtained by dividing the foregoing cross-sectional area of the pores in the first particles by the foregoing cross-sectional area of the first particles.

## 2. Tap density test

Tap density is a mass per unit volume measured after powder in a container is compacted by vibration under specified conditions, measured in g/cm$^3$.

The test method is as follows: A graduated cylinder containing a certain mass of powder was fastened on a mechanical vibration apparatus, and a vibration motor drove the mechanical vibration apparatus to vibrate vertically up and down. The graduated cylinder containing the powder vibrated rhythmically with the mechanical vibration apparatus. As vibration times increased, the powder in the graduated cylinder was gradually compacted by vibration. After the vibration times reached a preset number, the mechanical vibration apparatus stopped vibrating, and a volume in the graduated cylinder was read. According to the definition of density, density of the powder compacted by vibration was obtained by dividing the mass by the volume. Specific process parameters: vibration times: 5000 times; vibration frequency: 250$\pm$15 times/min; and ambient temperature: 15°C to 28°C.

## 3. Raman test for negative electrode active material

A lithium-ion secondary battery was discharged to 0% SOC and disassembled to obtain a negative electrode plate which was then subjected to high-temperature treatment at 400°C for 2 h (in nitrogen atmosphere), so that a negative electrode active material was peeled off from the current collector. The negative electrode active material was collected for Raman test. The negative electrode active material was scanned using a laser microscopic confocal Raman spectrometer (Raman, HR Evolution, HORIBA Scientific) to obtain D peaks and G peaks of all particles in the area range. Data was processed using LabSpec software to obtain peak intensities of the D peak and G peak of each particle, which were ID and IG, respectively. Frequency of ID/ID was counted with a step of 0.02 to obtain a normal distribution graph. (ID/ID)max and (ID/ID)min of these particles were counted, and the average value of ID/ID was calculated to obtain the ID/IG value of the negative electrode active material. A laser wavelength of the Raman spectrometer could be within the range of 532 nm to 785 nm.

A D peak is generally near 1350 cm$^{-1}$ and caused by a symmetric stretching vibration radial breathing mode of sp2 carbon atoms in an aromatic ring (structural defect).

A G peak appears near 1580 cm$^{-1}$. It is caused by tensile vibration between sp2 carbon atoms and corresponds to vibration (in-plane vibration of carbon atoms) of E2g optical phonon at the center of Brillouin zone.

**4. OI value test for negative electrode active material**

A lithium-ion secondary battery was discharged to 0% SOC and disassembled to obtain a negative electrode plate which was then subjected to high-temperature treatment at 400°C for 2 h (in nitrogen atmosphere), so that a negative electrode active material was peeled off from the current collector. The negative electrode active material was collected for OI value test. A diffraction line pattern of a (004) plane and a diffraction line pattern of a (110) plane in the X-ray diffraction pattern of the negative electrode active material were tested according to the mechanical industry standard JB/T 4220-2011 "Determination method of artificial graphite lattice parameter" of the People's Republic of China. Experimental conditions are as follows: CuKα radiation was used for X-ray, and CuKα radiation was removed by a filter or a monochromator. The working voltage of an X-ray tube was (30-35) kV, and the working current was (15-20) mA. The scanning speed of a counter was 1/4(°)/min. When the 004 diffraction line pattern was recorded, the scanning range of a diffraction angle 2θ was 53° to 57°. When the 110 diffraction line pattern was recorded, the scanning range of a diffraction angle 2θ was 75° to 79°. The peak area obtained from the diffraction line pattern of the (004) plane was recorded as C004. The peak area obtained from the diffraction line pattern of the (110) plane was recorded as C110. The value of C004/C110 of the negative electrode active material was calculated, thereby obtaining the OI value of the negative electrode active material.

**5. Discharge ratio test of lithium-ion battery at 0°C**

(1) The furnace temperature was adjusted to 25°C and a lithium-ion battery was left standing for 5 min;

(2) The lithium-ion battery was charged at a direct current (DC) of 0.5C to 2.5 V;

(3) The lithium-ion battery was left standing for 30 min;

(4) The lithium-ion battery was charged at a constant current (CC) of 0.2C to 3.6 V and then discharged at a constant voltage (CV) to 0.025C;

(5) The lithium-ion battery was left standing for 10 min;

(6) The lithium-ion battery was charged at a DC of 1.0C to 2.5 V (discharge capacity at 25°C);

(7) The lithium-ion battery was left standing for 10 min;

(8) The lithium-ion battery was charged at a CC of 0.2C to 3.6 V and then discharged at a CV to 0.025C;

(9) The lithium-ion battery was left standing for 10 min;

(10) The furnace temperature was adjusted to 0°C and the lithium-ion battery was left standing for 60 min;

(11) The lithium-ion battery was charged at a DC of 1.0C to 2.5 V;

(12) The lithium-ion battery was charged at a CC of 0.2C to 3.6 V and then discharged at a CV to 0.025C;

(13) The lithium-ion battery was left standing for 10 min;

(14) The lithium-ion battery was charged at a DC of 1.0C to 2.5 V (discharge capacity at 0°C);

(12) The furnace temperature was adjusted to 25°C and the lithium-ion battery was left standing for 60 min; and

(13) The test ended.

Discharge rate of the lithium-ion battery at 0°C=discharge capacity at 0°C/discharge capacity at 25°C×100%.

**Test results**

Table 1 shows influence on performance of the lithium-ion battery by the ratio X of the average cross-sectional area of the pores in the first particles having the pores to the average cross-sectional area of the first particles within the 200 $\mu$m$\times$200 $\mu$m region on the cross section of the negative electrode active material layer, and by the tap density TD, in g/m$^3$, of the negative electrode active material.

**Table 1**

| Examples and comparative examples | Ratio of average cross-sectional area of pores to average cross-sectional area of particles X | Tap density of negative electrode active material TD (g/cm$^3$) | TD-0.05$\times$(1/X) | Discharge ratio at 0°C |
|---|---|---|---|---|
| Example 1 | 4.5% | 1.21 | 0.10 | 81.1% |
| Example 2 | 5.0% | 1.13 | 0.13 | 82.0% |
| Example 3 | 7.0% | 0.86 | 0.15 | 83.3% |
| Example 4 | 8.0% | 0.73 | 0.10 | 84.5% |
| Example 5 | 7.0% | 0.90 | 0.19 | 86.5% |
| Example 6 | 11.0% | 0.74 | 0.29 | 85.3% |
| Example 7 | 13.0% | 0.73 | 0.35 | 84.0% |
| Example 8 | 15.0% | 0.73 | 0.40 | 83.8% |
| Example 9 | 5.2% | 1.34 | 0.38 | 81.0% |
| Example 10 | 4.3% | 1.26 | 0.10 | 82.8% |
| Comparative Example 1 | 4.3% | 1.25 | 0.09 | 75.5% |
| Comparative Example 2 | 16.0% | 0.74 | 0.43 | 74.0% |
| Comparative Example 3 | 18.0% | 0.83 | 0.55 | 70.1% |
| Comparative Example 4 | 20.0% | 0.83 | 0.58 | 69.2% |

It can be learned from data in Table 1 that when the ratio X of the average cross-sectional area of the pores to the average cross-sectional area of the particles is within the range of 4.0% to 15%, and X and the tap density TD of the negative electrode active material satisfy the specific relationship of 0.1$\leq$TD-0.05$\times$(1/X)$\leq$0.4, the lithium-ion battery has excellent discharge rate performance at low temperatures.

Table 2 shows influence on the performance of the lithium-ion battery by the largest cross-sectional length L, in $\mu$m, and the smallest cross-sectional length D, in $\mu$m, of negative electrode active material particles, and the specific surface area BET, in m$^2$/g, of the negative electrode active material within the 200 $\mu$m$\times$200 $\mu$m region on the cross section of the negative electrode active material layer. Except the parameters listed in Table 2, the remaining parameters in Examples 11 to 16 are the same as those in Example 6.

**Table 2**

| Example | Largest cross-sectional length L of particles ($\mu$m) | Smallest cross-sectional length D of particles ($\mu$m) | Specific surface area BET of negative electrode active material (m$^2$/g) | L/D$\leq$2.50 | 2xBET L/D | Discharge ratio at 0°C |
|---|---|---|---|---|---|---|
| Example 6 | 8.0 | 3.0 | 1.58 | 2.7 | 0.46 | 86.50% |
| Example 11 | 5.0 | 5.0 | 0.75 | 1.0 | 0.50 | 87.0% |
| Example 12 | 7.8 | 6.0 | 0.92 | 1.3 | 0.54 | 87.5% |
| Example 13 | 8.0 | 4.7 | 1.25 | 1.7 | 0.8 | 88.1% |
| Example 14 | 8.5 | 4.3 | 1.43 | 2.0 | 0.86 | 87.6% |

(continued)

| Example | Largest cross-sectional length L of particles ($\mu$m) | Smallest cross-sectional length D of particles ($\mu$m) | Specific surface area BET of negative electrode active material ($m^2$/g) | L/D≤2.50 | 2xBET L/D | Discharge ratio at 0°C |
|---|---|---|---|---|---|---|
| Example 15 | 12.0 | 5.5 | 1.73 | 2.2 | 1.26 | 87.2% |
| Example 16 | 13.8 | 5.5 | 2.00 | 2.5 | 1.50 | 86.9% |

It can be learned from data in Table 2 that when the negative electrode active material particles are ellipsoidal, the aspect ratio L/D≤2.50, and the aspect ratio L/D and the specific surface area BET of the negative electrode active material satisfy 0.40≤2×BET-L/D≤1.50, the lithium-ion battery has good discharge rate performance at low temperatures.

Table 3 shows influence on the performance of the lithium-ion battery by the average maximum Feret diameters F, in $\mu$m, of the negative electrode active material particles within the 200 $\mu$m×200 $\mu$m region on the cross section of the negative electrode active material layer. Except the parameters listed in Table 3, the remaining parameters in Examples 17 to 24 are the same as those in Example 13.

**Table 3**

| Example | Average maximum Feret diameter F of negative electrode active material particles ($\mu$m) | Discharge ratio at 0°C |
|---|---|---|
| Example 13 | 4 | 88.1% |
| Example 17 | 5 | 88.5% |
| Example 18 | 10 | 88.8% |
| Example 19 | 15 | 89.0% |
| Example 20 | 20 | 89.2% |
| Example 21 | 30 | 89.8% |
| Example 22 | 40 | 89.5% |
| Example 23 | 50 | 89.1% |
| Example 24 | 55 | 88.6% |

It can be learned from data in Table 3 that when the average maximum Feret diameter F of the cross sections of the negative electrode active material particles satisfies 4 $\mu$m≤F≤55 $\mu$m, the discharge ratio of the lithium-ion battery at low temperatures is effectively improved. An appropriate particle size can not only guarantee rapid lithium ion deintercalation and intercalation, but also weaken the side reaction with the electrolyte, thereby improving the discharge performance of the lithium-ion battery at low temperatures.

Table 4 shows influence on the performance of the lithium-ion battery by the single-side thickness H and the single-side energy density E of the negative electrode active material layer. Except the parameters listed in Table 4, the remaining parameters in Examples 25 to 33 are the same as those in Example 21.

**Table 4**

| Example | Single-side thickness of negative electrode active material layer H ($\mu$m) | Single-side energy density of negative electrode active material layer E mAh/$mm^2$ | Discharge ratio at 0°C |
|---|---|---|---|
| Example 21 | 82 | 0.059 | 89.8% |
| Example 25 | 25 | 0.012 | 90.0% |
| Example 26 | 38 | 0.058 | 90.8% |
| Example 27 | 70 | 0.066 | 90.4% |
| Example 28 | 78 | 0.015 | 90.3% |

(continued)

| Example | Single-side thickness of negative electrode active material layer H ($\mu$m) | Single-side energy density of negative electrode active material layer E mAh/mm$^2$ | Discharge ratio at 0°C |
|---|---|---|---|
| Example 29 | 86 | 0.029 | 90.5% |
| Example 30 | 89 | 0.055 | 90.8% |
| Example 31 | 35 | 0.020 | 91.6% |
| Example 32 | 45 | 0.033 | 91.2% |
| Example 33 | 60 | 0.045 | 92.5% |

It can be learned from data in Table 4 that when the single-side thickness H of the negative electrode active material layer is ≤90 $\mu$m and the single-side energy density E of the negative electrode active material layer satisfies 0.01 mAh/mm$^2$≤E≤0.07 mAh/mm$^2$, the lithium-ion battery has a high discharge ratio. This means that lithium ion deintercalation and intercalation can be guaranteed by controlling the thickness and energy density of the active material layer, thereby effectively improving the rate performance of the lithium-ion battery at low temperatures.

Table 5 shows influence on the performance of the lithium-ion battery by the tap density TD, defect degree ID/IG, and orientation index OI of the negative electrode active material. Except the parameters listed in Table 5, the remaining parameters in Examples 40 to 50 are the same as those in Example 33.

**Table 5**

| Example | Tap density TD of negative electrode active material (g/cm$^3$) | ID/IG of negative electrode active material | OI value of negative electrode active material | Discharge ratio at 0°C |
|---|---|---|---|---|
| Example 33 | 0.49 | 0.53 | 18 | 92.5% |
| Example 34 | 0.60 | 0.51 | 16 | 92.8% |
| Example 35 | 0.80 | 0.56 | 18 | 93.0% |
| Example 36 | 1.30 | 0.60 | 22 | 92.9% |
| Example 37 | 0.55 | 0.20 | 16 | 92.6% |
| Example 38 | 0.58 | 0.26 | 17 | 92.9% |
| Example 39 | 0.58 | 0.35 | 23 | 93.0% |
| Example 40 | 1.32 | 0.48 | 25 | 92.9% |
| Example 41 | 0.55 | 0.52 | 5 | 93.2% |
| Example 42 | 0.59 | 0.55 | 8 | 93.0% |
| Example 43 | 1.33 | 0.60 | 13 | 93.4% |
| Example 44 | 0.65 | 0.17 | 5 | 93.9% |
| Example 45 | 0.78 | 0.20 | 8 | 94.5% |
| Example 46 | 0.88 | 0.26 | 9 | 95.0% |
| Example 47 | 1.05 | 0.35 | 11 | 95.1% |
| Example 48 | 1.06 | 0.38 | 12 | 94.9% |
| Example 49 | 1.16 | 0.36 | 10 | 94.4% |
| Example 50 | 1.23 | 0.41 | 13 | 94.5% |

It can be learned from comparison between Examples 34 to 36 and Example 33 that when the tap density TD, g/cm$^3$, of the negative electrode active material meets 0.60≤TD≤1.30, processing performance of the negative electrode slurry is improved, and the rate performance of the lithium-ion battery at low temperatures is improved accordingly.

It can be learned from comparison between Examples 37 to 40 and Example 33 that when ID/IG≤0.6, the rate performance of the lithium-ion battery at low temperatures is improved accordingly. When the value is within this range, the negative electrode active material has reduced defects. This is beneficial to formation of SEI films, which can guarantee kinetic performance of the negative electrode active material, thereby helping to improve the rate performance of the lithium-ion battery at low temperatures.

It can be learned from comparison between Examples 41 to 43 and Example 33 that when the OI value of the negative electrode active material is ≤15, the negative electrode active material is isotropic, and lithium ions can be well deintercalated and intercalated along all directions, thereby further improving the rate performance of the lithium-ion battery at low temperatures.

Although illustrative embodiments have been demonstrated and described, persons skilled in the art should understand that the foregoing embodiments cannot be construed as limitations on this application, and that some embodiments may be changed, replaced, and modified without departing from the spirit, principle, and scope of this application.

## Claims

1. A negative electrode plate, comprising a negative electrode current collector and a negative electrode active material layer disposed on the negative electrode current collector; wherein the negative electrode active material layer comprises a negative electrode active material, the negative electrode active material comprising negative electrode active material particles, and the negative electrode active material particles comprising a first particle having a pore,

   wherein in a 200 $\mu$m$\times$200 $\mu$m region of a cross section of the negative electrode active material layer, the negative electrode active material satisfies $0.10 \leq TD-0.05\times(1/X) \leq 0.40$,
   wherein X represents a ratio of an average cross-sectional area of the pore in the first particle to an average cross-sectional area of the first particle, and $4.0\% \leq X \leq 15\%$; wherein TD represents a tap density of the negative electrode active material, in g/cm$^3$.

2. The negative electrode plate according to claim 1, wherein the negative electrode plate satisfies at least one of the following conditions (i) to (iii):

$$\text{(i) } 0.1 \leq TD-0.05\times(1/X) \leq 0.35;$$

$$\text{(ii) } 5\% \leq X \leq 13\%;$$

   or

$$\text{(iii) } 0.5 \leq TD \leq 1.5.$$

3. The negative electrode plate according to claim 1, wherein the negative electrode plate satisfies at least one of the following conditions (iv) to (vi):

$$\text{(iv) } 0.19 \leq TD-0.05\times(1/X) \leq 0.3;$$

$$\text{(v) } 7\% \leq X \leq 13\%;$$

   or

$$\text{(vi) } 0.6 \leq TD \leq 1.3.$$

4. The negative electrode plate according to claim 1, wherein in the 200 $\mu$m$\times$200 $\mu$m region of a cross section of the negative electrode active material layer, the negative electrode active material satisfies $0.40 \leq 2\times BET\text{-}L/D \leq 1.50$ and $L/D \leq 2.50$, wherein L represents a largest cross-sectional length of the negative electrode active material particles, in $\mu$m; D represents a smallest cross-sectional length of the negative electrode active material particles, in $\mu$m; and BET represents a specific surface area of the negative electrode active material, in m$^2$/g.

5. The negative electrode plate according to claim 4, wherein $0.50 \leq 2 \times BET\text{-}L/D < 1.30$, and/or $1.0 \leq L/D \leq 2.2$, and/or $0.5 \leq BET \leq 2.5$.

6. The negative electrode plate according to claim 1, wherein the negative electrode plate satisfies at least one of the following conditions (vii) to (xi):

(vii) in the 200 $\mu$m$\times$200 $\mu$m region of a cross section of the negative electrode active material layer, an average maximum Feret diameter F of the negative electrode active material particles satisfies $4 \ \mu m \leq F \leq 55 \ \mu m$;

(viii) a single-side thickness H of the negative electrode active material layer satisfies $H \leq 90 \ \mu m$;

(ix) a single-side energy density E the negative electrode active material layer satisfies $0.01 \ mAh/mm^2 \leq E \leq 0.07 \ mAh/mm^2$;

(x) in Raman test, the negative electrode active material satisfies $ID/IG \leq 0.6$, wherein ID is an intensity of a peak at 1350 cm$^{-1}$ in a Raman spectra; and IG is an intensity of a peak at 1580 cm$^{-1}$ in the Raman spectra; or

(xi) an orientation index OI of the negative electrode active material satisfies $OI \leq 25$.

7. The negative electrode plate according to claim 1, wherein the negative electrode plate satisfies at least one of the following conditions (xii) to (xiv):

$$(xii) \ 25 \ \mu m \leq H \leq 60 \ \mu m;$$

$$(xiii) \ 0.15 \leq ID/IG \leq 0.5;$$

or

$$(xiv) \ 5 \leq OI \leq 25.$$

8. A secondary battery, comprising the negative electrode plate according to any one of claims 1 to 7.

9. The secondary battery according to claim 8, wherein a discharge rate of the secondary battery at 0°C satisfies $Q1/Q2 \geq 0.8$, wherein Q1 is a discharge capacity at 1C at 0°C and Q2 is a discharge capacity at 1C at 25°C.

10. An electronic apparatus, comprising the secondary battery according to claim 8 or 9.

FIG. 1

## INTERNATIONAL SEARCH REPORT

| International application No. |
| --- |
| **PCT/CN2022/115902** |

**A. CLASSIFICATION OF SUBJECT MATTER**

H01M4/36(2006.01)i;H01M4/587(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 负极, 阳极, 石墨, 孔, 截面, 面积, 振实密度, battery, negative electrode, anode, graphite, hole, cross section, area, tap density

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014229517 A (HITACHI CHEMICAL CO., LTD.) 08 December 2014 (2014-12-08) description, paragraphs 3 and 15-117, and figure 2 | 1-10 |
| X | CN 101309859 A (MITSUI MINING CO., LTD.) 19 November 2008 (2008-11-19) description, page 1, paragraph 2, and page 5, second-to-last paragraph to page 22, last paragraph, and figures 1-9 | 1-10 |
| A | JP 2021097017 A (TOYOTA MOTOR CORP.) 24 June 2021 (2021-06-24) entire document | 1-10 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **12 May 2023** | **16 May 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/115902**

| Patent document cited in search report | | | Publication date (day/month/year) | Patent family member(s) | | | Publication date (day/month/year) |
|---|---|---|---|---|---|---|---|
| JP | 2014229517 | A | 08 December 2014 | JP | 6201425 | B2 | 27 September 2017 |
| CN | 101309859 | A | 19 November 2008 | US | 2009258298 | A1 | 15 October 2009 |
| | | | | US | 8329136 | B2 | 11 December 2012 |
| | | | | WO | 2007069664 | A1 | 21 June 2007 |
| | | | | JPWO | 2007069664 | A1 | 21 May 2009 |
| | | | | JP | 5042854 | B2 | 03 October 2012 |
| | | | | KR | 20080075492 | A | 18 August 2008 |
| | | | | KR | 101281186 | B1 | 02 July 2013 |
| | | | | EP | 1961701 | A1 | 27 August 2008 |
| | | | | EP | 1961701 | B1 | 07 June 2017 |
| | | | | DK | 1961701 | T3 | 18 September 2017 |
| JP | 2021097017 | A | 24 June 2021 | None | | | |

Form PCT/ISA/210 (patent family annex) (July 2022)